# EUROPÄISCHE PATENTSCHRIFT

(11) **EP 3 294 579 B1**
(45) Veröffentlichungstag und Bekanntmachung des Hinweises auf die Patenterteilung: **12.12.2018**
(21) Anmeldenummer: 16722168.8
(22) Anmeldetag: 10.05.2016
(51) Int. Cl.: B60H 1/34

(54) **EINRICHTUNG ZUM STEUERN EINES LUFTSTROMS**
DEVICE FOR CONTROLLING AN AIR STREAM
DISPOSITIF DE RÉGULATION D'UN FLUX D'AIR

(30) Priorität: 11.05.2015 DE 102015006085; 29.10.2015 DE 102015118549
(43) Veröffentlichungstag der Anmeldung: 21.03.2018
(73) Patentinhaber: Dr. Schneider Kunststoffwerke GmbH, 96317 Kronach (DE)
(72) Erfinder: GAREIS, Jenny, 96346 Wallenfels (DE); SEEMANN, Jürgen, 96317 Kronach (DE); ENDRES, Gerhard, 95336 Mainleus (DE)
(86) Internationale Anmeldenummer: PCT/EP2016/060406
(87) Internationale Veröffentlichungsnummer: WO 2016/180813

(56) Entgegenhaltungen:
- EP-A2- 1 712 384
- DE-A1-102011 050 435
- DE-U1-202010 013 073
- DE-U1-202012 100 243
- DE-U1-202012 100 980

## Beschreibung

Es wird eine Einrichtung zum Steuern eines Luftstroms mit mindestens einer verschwenkbaren in einem Gehäuse gelagerten Steuerlamelle und mit orthogonal zur Steuerlamelle verlaufenden und schwenkbar im Gehäuse gelagerten zweiten Lamellen beschrieben, wobei über die Steuerlamelle und die zweiten Lamellen die Richtung des aus dem Gehäuse austretenden Luftstroms und über die zweiten Lamelle die Menge der ausströmenden Luft einstellbar sind.

Aus dem Stand der Technik sind verschiedene Einrichtungen zum Steuern eines Luftstroms bekannt, wobei über hinter einer Steuerlamelle angeordnete Vertikallamellen sowohl die Richtung der ausströmenden Luft als auch die Menge der ausströmenden Luft einstellbar ist. Luftrichtung und -menge können nicht unabhängig voneinander eingestellt werden. Die hinteren Lamellen steuern die Luftrichtung und verschließen in Extremstellung den Luftauslass.

DE 10 2013 100 534 A1 offenbart eine Einrichtung zum Steuern eines Luftstroms, wobei eine als Steuerlamelle ausgebildete vordere Horizontallamelle eine Aufnahme aufweist, in der ein kreisförmiges Bedienelement aufgenommen ist. Über das Bedienelement kann durch eine Drehbewegung eine Änderung der Ausrichtung von Vertikallamellen erfolgen. Die Vertikallamellen können über das Bedienelement so weit verschwenkt werden, dass sie den Luftstrom durch den Luftausströmer unterbinden. DE 298 14 953 U1 offenbart eine Frischluftdüsen-Einrichtung für ein Kraftfahrzeug, wobei ebenfalls über die Vertikallamellen die Steuerung der Menge der ausströmenden Luft einstellbar ist. Zum Verschwenken oder Schwenken der Lamellen sind außerhalb des Gehäuses angeordnete Verstelleinrichtungen in Form von Bedienrädern vorgesehen.

Weiterhin offenbart die DE 20 2012 100 980 U1 eine Einrichtung nach dem Oberbegriff des unabhängigen Anspruchs 1. Die aus dem Stand der Technik bekannten Einrichtungen weisen jedoch den Nachteil auf, dass über die hinteren Vertikallamellen nur ein unzureichendes Verschließen des Luftzuführschachts möglich ist. Insbesondere ist es bei Einrichtungen zum Steuern eines Luftstroms mit Bedienelementen, die im Bereich der Lamellen angeordnet sind, nicht möglich, über die Bedienelemente eine ausreichende Kraft auf die hinteren Vertikallamellen zu übertragen, die ein abdichtenden Verschließen ermöglicht. Zudem weisen die aus dem Stand der Technik bekannten Einrichtungen mit im Wesentlichen mittig angeordneten Bedienelementen den Nachteil auf, dass diese eine Vielzahl von Komponenten umfassen, die in den Strömungskanal des Luftausströmers ragen und damit eine zusätzliche aber ungewünschte Ablenkung der Luft bewirken.

Es ist daher Aufgabe, eine Einrichtung zum Steuern eines Luftstroms anzugeben, welche die Nachteile des Stands der Technik behebt und eine kostengünstige, einfache und sichere Steuerung der Luftausströmrichtung und der Menge der ausströmenden Luft bereitstellt.

Die Aufgabe wird durch eine Einrichtung mit den in Anspruch 1 angegebenen technischen Merkmalen gelöst. Vorteilhafte Weiterbildungen sind in den Unteransprüchen angegeben.

Bei einer die vorstehend genannten Aufgabe lösenden Einrichtung zum Steuern eines Luftstroms, mit mindestens einer verschwenkbar in einem Gehäuse gelagerten ersten Steuerlamelle und mit orthogonal zur ersten Steuerlamelle verlaufenden und verschwenkbar im Gehäuse gelagerten zweiten Lamellen, wobei über die erste Steuerlamelle und die zweiten Lamellen die Richtung des aus dem Gehäuse austretenden Luftstroms und über die zweiten Lamellen die Menge der ausströmenden Luft einstellbar sind, und mit einem Bedienelement, das über einem Lagersteg an einem Luftaustrittsbereich des Gehäuses angeordnet ist,
- ist das Bedienelement orthogonal zur Längsachse der Steuerlamelle verschwenkbar an dem Lagersteg angeordnet und mit einem am Lagersteg drehbar gelagerten ersten Kegelrad und mit der Steuerlamelle gekoppelt,
- steht das erste Kegelrad mit einem zweiten Kegelrad in Eingriff,
- ist das zweite Kegelrad orthogonal zu dem ersten Kegelrad drehbar am Gehäuse angeordnet,
- ist das zweite Kegelrad mit einer Hebelanordnung gekoppelt, und
- weist die Hebelanordnung mindestens ein verdrehbar gelagertes erstes Koppelglied auf, wobei das erste Koppelglied mit mindestens einer ersten Koppelstange und die mindestens eine erste Koppelstange mit den zweiten Lamellen gekoppelt ist.

Die Einrichtung kann beispielsweise als Luftausströmer ausgebildet und in einem Armaturenbrett eines Kraftfahrzeugs angeordnet sein. Die Einrichtung ermöglicht ein abdichtendes Verschließen eines Luftkanals, der sich durch das Gehäuse hindurch erstreckt, da über die Hebelanordnung die zweiten Lamellen durch Druck verschwenkt werden. Bei den aus dem Stand der Technik bekannten Einrichtungen werden die hinteren Vertikallamellen stets gezogen, wobei nicht das zum abdichtenden Verschließen des Luftkanals erforderliche Drehmoment auf die zweiten Lamellen aufgebracht werden kann. Werden die zweiten Lamellen jedoch über eine Hebelanordnung verschwenkt, so kann ein entsprechendes Moment auf die Lamellen übertragen werden, sodass diese die gewünschte Stellung einnehmen. Hierbei ist die Hebelanordnung so ausgebildet und an dem Gehäuse angeordnet, dass diese auf einfache Weise ein hohes Moment auf die zweiten Lamellen aufbringt. Dadurch ist es möglich, das Verschließen des Luftkanals über die zweiten Lamellen sowohl einfacher als auch sicherer durchzuführen. Der Lagersteg kann beispielsweise mittig im Bereich des Luftaustrittsbereiches des Gehäuses angeordnet sein. Die wesentlichen Komponenten zum Verschwenken oder Schwenken der Lamellen sind daher im Bereich des Lagerelementes angeordnet und nicht an der Steuerlamelle. Dies bewirkt einerseits keine Ablenkung des Luftstroms durch Bauteile an der Steuerlamelle und verhindert zudem ein Durchbiegen der Steuerlamelle, da kein Druck auf die Steuerlamelle über Bedienelemente aufgebracht wird. Das Bedienelement stützt sich bei hier beschriebenen Einrichtung an dem Lagersteg ab. Daher kann bei dieser Einrichtung auch auf zusätzliche Mittel zum Versteifen oder Stützen der Steuerlamelle verzichtet werden. Insbesondere ist diese Einrichtung bei sehr breiten Luftausströmern vorteilhaft, da ein Durchbiegen einer sehr langen Steuerlamelle verhindert werden kann. Ferner kann die Steuerlamelle eine vertikal verlaufende Lamelle oder eine horizontal verlaufende Lamelle sein. Die Anordnung der Einrichtung und der einzelnen Komponenten in horizontaler oder vertikaler Richtung kann beliebig vorgenommen werden.

Über das Bedienelement kann durch ein Verschwenken oder Schwenken die Steuerlamelle verschwenkt werden, um die Luft in einer ersten Richtung abzulenken. Ferner können durch ein Drehen des Bedienelementes über das erste Kegelrad, das zweite Kegelrad und die Hebelanordnung und das damit gekoppelte erste Koppelglied die zweiten Lamellen verschwenkt werden, um die Luft in einer zweiten Richtung abzulenken und um zugleich die Menge der ausströmenden Luft einzustellen.

In weiteren Ausführungsformen ist eine der zweiten Lamellen als zweite Steuerlamelle ausgebildet und das erste Koppelglied mit der zweiten Steuerlamelle verbunden, wobei sich zu beiden Seiten der zweiten Steuerlamelle parallel angeordnete zweite Lamellen erstrecken, wobei das erste Koppelglied an einem ersten Endabschnitt mit der ersten Koppelstange und an einem zweiten Endabschnitt mit einer zweiten Koppelstange verdrehbar verbunden ist und eine erste Gruppe von zweiten Lamellen mit der ersten Koppelstange und eine zweite Gruppe von zweiten Lamellen mit der zweiten Koppelstange verbunden sind. Bei einem Verdrehen oder Drehen des Bedienelementes erfolgt über die damit gekoppelten Elemente eine Verlagerung der ersten Koppelstange und der zweiten Koppelstange, sodass die zweiten Lamellen in ihre Schließposition gedrückt werden können. Hierzu wird ein entsprechendes Drehmoment auf die zweiten Lamellen übertragen, wobei die erste Koppelstange und die zweite Koppelstange voneinander weg bewegt werden.

Das erste Koppelglied kann gemeinsam mit der zweiten Steuerlamelle um deren Schwenkachse verdrehbar und beabstandet zur Schwenkachse der zweiten Lamellen mit der ersten Koppelstange und der zweiten Koppelstange verbunden sein. Das erste Koppelglied kann in derartigen Ausführungsformen als Verlängerung eines Lagerzapfens der zweiten Steuerlamelle ausgebildet sein. Das erste Koppelglied weist dazu mindestens zwei orthogonal von der Schwenkachse abstehende Endabschnitte auf, an welchen Mitnehmer für die Koppelstangen und ein Hebelelement der Hebelanordnung angeordnet sind. Auch die anderen zweiten Lamellen können eine Verlängerung an ihren Lagerzapfen, welche die Drehachse der zweiten Lamellen definieren, aufweisen. An diesen Verlängerungen ist ein Mitnehmer angeordnet, der in entsprechenden Öffnungen in den ersten und zweiten Koppelstangen aufgenommen ist. Diese Mitnehmer sind ebenfalls beabstandet zur durch die Lagerzapfen der zweiten Lamellen verlaufenden Schwenkachsen angeordnet.

Die Hebelanordnung kann ein zweites drehbar mit dem zweiten Kegelrad gekoppeltes Koppelglied mit einem exzentrisch zur Drehachse des zweiten Koppelglieds angeordneten ersten Mitnehmer, und ein drehbar am Gehäuse angeordnetes Hebelelement mit einer ersten Führungskulisse und einer zweiten Führungskulisse, die jeweils beabstandet zur Drehachse des Hebelelements an gegenüberliegenden Abschnitten angeordnet sind, aufweisen, wobei der erste Mitnehmer in der ersten Führungskulisse und ein zweiter Mitnehmer in der zweiten Führungskulisse führbar gelagert sind, und wobei der zweite Mitnehmer im ersten Endabschnitt des ersten Koppelglieds angeordnet und mit der ersten Koppelstange verdrehbar verbunden ist. Über die Ausbildung der Hebelanordnung kann auf einfache Art und Weise die Rotation des zweiten Kegelrads in eine Verschiebebewegung der ersten Koppelstange und der zweiten Koppelstange übertragen werden. Zusätzlich können die erste Koppelstange und die zweite Koppelstange eine Ausgleichsbewegung senkrecht zur Verschieberichtung durchführen.

Das Hebelelement kann im Beriech der zweiten Führungskulisse mindestens einen Anschlag aufweisen, der über die erste Koppelstange und/oder über die zweite Koppelstange, oder über eine Führung am Gehäuse das Verschwenken oder Schwenken der zweiten Lamellen begrenzt. Der Anschlag verhindert ein Überdrehen des Bedienelementes. Der Anschlag verhindert, dass die zweiten Lamellen aus einer Schließposition, in welcher die zweiten Lamellen im Wesentlichen in einer Ebene angeordnet sind, hinaus bewegt werden. In Abhängigkeit der Ausbildung der Hebelanordnung, insbesondere der Abstände des Hebelelementes, des ersten Koppelglieds und der Mitnehmer an den Koppelgliedern, können verschiedene Bedienkräfte bzw. Momente übertragen werden. Da die über die Hebelanordnung übertragenen Kräfte und Momente größer sind als die Kräfte und Momente bei den aus dem Stand der Technik bekannten verschiebbar oder verdrehbar gelagerten Bedienelementen kann vorteilhafterweise zwar ein abdichtendes Verschließen eines Luftkanals über die zweiten Lamellen erreicht werden, jedoch muss auch sichergestellt werden, dass kein Verdrehen oder Drehen über einen festlegbaren Bereich hinaus erfolgt. In alternativen Ausführungsformen können die zweiten Lamellen und die zweite Steuerlamelle in ihrer Schließposition an einem Anschlag oder mehreren Anschlägen im Gehäuse anliegen, die in den Strömungskanal bzw. Luftkanal hineinragen.

Das Bedienelement kann eine dritte Führungskulisse aufweisen, die sich entlang der Längsachse des Bedienelements erstreckt, und in der dritten Führungskulisse kann ein drittes Koppelglied angeordnet sein, das mit dem ersten Kegelrad verbunden ist. Diese Ausführung stellt sicher, dass auch bei einem Verschwenken oder Schwenken des Bedienelementes ein Verdrehen oder Drehen des ersten Kegelrades durchgeführt werden kann. Die dritte Führungskulisse kann dabei als Langloch und das dritte Koppelglied als Stift ausgebildet sein. Das dritte Koppelglied bzw. der Stift können sich quer durch eine innere Öffnung, die sich im Wesentlichen durch die Drehachse des ersten Kegelrads erstreckt, angeordnet sein. Das erste Kegelrad ist dabei über einen äußeren Abschnitt des ersten Kegelrads in einer Lagerung am Lagersteg aufgenommen. Das Bedienelement erstreckt sich in diesen Ausführungen dann durch das erste Kegelrad hindurch.

Das Bedienelement kann ferner einen kugelartigen Endabschnitt aufweisen, der in einer Kugelpfanne der ersten Steuerlamelle aufgenommen ist. Die erste Steuerlamelle weist sonst keine weiteren Teile wie Aufnahmen, Lagerabschnitte oder Koppelelemente auf, die in einen Luftströmungskanal im Luftkanal der Einrichtung ragen und damit die ausströmende Luft verwirbeln. Die kugelartige Verbindung zwischen der Steuerlamelle und dem Bedienelement stellt sicher, dass in sämtlichen Positionen der Steuerlamelle und der zweiten Lamellen sowie das Bedienelementes ein Verschwenken oder Schwenken durchgeführt werden kann. Vorzugsweise ist der kugelartige Endabschnitt in der Kugelpfanne derart aufgenommen, dass nach einem Einfügen des Endabschnittes des Bedienelementes dieser aus der Kugelpfanne nicht mehr herausgenommen werden kann. Beispielsweise könnte dies über eine sogenannte Clip-Verbindung erfolgen.

Die zweiten Lamellen können in weiteren Ausführungsformen einen Querschnitt mit mindestens einer Abstufung aufweisen. Die zweiten Lamellen und damit auch die zweite Steuerlamelle weisen in derartigen Ausführungsformen mindestens zwei flächige Abschnitte auf, die versetzt zueinander angeordnet sind. Befinden sich die zweiten Lamellen in ihrer Schließstellung, um mit dem Luftkanal abzuschließen und die Luftzufuhr zu unterbinden, liegen die versetzt angeordneten Flächenabschnitte der zweiten Lamellen aneinander an. Die zweiten Lamellen können auch so ausgebildet sein, dass diese jeweils nur in den Anlagebereichen eine Abstufung aufweisen. Die Anlagebereiche sind die Abschnitte der zweiten Lamellen, an welchen diese in der Schließposition mit benachbarten zweiten Lamellen oder an entsprechenden Anlagevorsprüngen im Gehäuse der Einrichtung anliegen.

Die zweiten Lamellen können mindestens an ihren parallel zur Schwenkachse verlaufenden Außenkanten eine Dichtung aufweisen und das Gehäuse kann im Bereich der zweiten Lamellen mindestens an parallel zur Schwenkachse der zweiten Lamellen verlaufen inneren Seitenwänden eine Dichtung aufweisen. Die Dichtung an den zweiten Lamellen und im Gehäuse kann aber auch umlaufend vorgesehen sein. Die Dichtung verbessert zusätzlich die Abdichtung in einer Schließposition der zweiten Lamellen. Vorzugsweisen sollten die Dichtungsmittel so gewählt sein, dass diese flexibel und elastisch sind. Hierüber wird sichergestellt, dass die Dichtungselemente sich an die zweiten Lamellen anlegen und nicht ein Verschwenken oder Schwenken derer behindern. Vorzugsweise können hierfür Kunststoffschäume oder Kautschukelemente/Kautschukschäume oder Schäume aus Gummi oder Schäume aus/mit Gummibestandteilen oder Elementen aus Gummi verwendet werden.

Das mindestens eine Hebelelement, die erste Koppelstange und die zweite Koppelstange und das erste Koppelglied können außerhalb des Gehäuses angeordnet sein. Die vorstehend genannten Komponenten ragen daher nicht in einen Luftkanal hinein und behindern die ausströmende Luft oder bewirken eine Verwirbelung der ausströmenden Luft. Derartige Einrichtungen weisen ein zentral in einem Luftaustrittsabschnitt angeordnetes Bedienelement auf und ermöglichen zudem eine Luftablenkung, ohne dass die zum Verschwenken oder Schwenken und Verschließen vorgesehenen Komponenten eine ungewollte zusätzliche Luftablenkung bewirken.

Die erste Steuerlamelle kann mit mindestens einer weiteren verschwenkbar am Gehäuse gelagerten Lamelle gekoppelt sein.

Bei Einrichtungen mit einer geringen Höhe ist oftmals nur eine Steuerlamelle erforderlich. Weist die Einrichtung jedoch eine größere Höhe auf, so können mehrere parallel zur ersten Steuerlamelle angeordnete Lamellen vorgesehen sein. Die parallel zur ersten Steuerlamelle angeordneten Lamellen sind dabei vorzugsweise außerhalb des Gehäuses über entsprechende Mitnahmeelemente und eine weitere Koppelstange mit der ersten Steuerlamelle gekoppelt.

Dadurch, dass die wesentlichen Kinematik-Bauteile, wie die erste Koppelstange, das Hebelelement, und/oder die zweite Koppelstange sowie das erste Koppelglied, außerhalb des Gehäuses angeordnet sind, werden Querschnittsverluste, wie aus dem Stand der Technik bekannt, vermieden. Darüber hinaus sind bei dem aus dem Stand der Technik bekannten Einrichtungen oftmals die wesentlichen Kinematik-Bauteile sichtbar, was das optische Erscheinungsbild von derartigen Luftausströmen verschlechtert. Die eben beschriebenen Einrichtungen lösen diese Probleme, da die wesentlichen Komponenten, wie beispielsweise die Hebelanordnung, außerhalb des Gehäuses angeordnet sind. Darüber hinaus besteht ein weiterer Vorteil bei den vorstehend beschriebenen Einrichtungen darin, dass keine Ausschnitte in einer der Lamellen, beispielsweise den zweiten Lamellen notwendig sind. So offenbart bspw. DE 10 2013 100 534 A1 die Möglichkeit die Vertikallamellen in eine Schließposition zu verbringen, jedoch ist bei sämtlichen Ausführungsformen mindestens eine Lamelle mit einem großflächigem Ausschnitt versehen, der die Luftablenkung unzureichend erfüllt und zudem eine zusätzliche Verwirbelung eines Luftstroms bewirkt. In der Regel sind solche Ausschnitte vor allem bei Vertikallamellen bei Einrichtungen aus dem Stand der Technik erforderlich, da das Bedienelement dieser Einrichtungen einen Angriffspunkt auf die Vertikallamellen benötigt.

Bei den Einrichtungen können auch Beleuchtungselemente, wie Leuchtdioden, Lichtleiter oder andere Mittel vorgesehen sein. Beispielsweise kann im Bereich des Lagerstegs eine Lichtquelle angeordnet sein, die über Lichtleiter eine Beleuchtung der ersten Steuerlamelle, der zweiten Lamellen oder von Teilen des Gehäuses bereitstellt.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung einer Einrichtung zum Steuern eines Luftstroms;
- Fig. 2: eine Vorderansicht einer Einrichtung zum Steuern eines Luftstroms;
- Fig. 3: einen Schnitt durch eine Einrichtung zum Steuern eines Luftstroms;
- Fig. 4: eine perspektivische Darstellung von Komponenten einer Einrichtung zum Steuern eines Luftstroms;
- Fig. 5: eine vergrößerte perspektivische Darstellung von Komponenten einer Einrichtung zum Steuern eines Luftstroms;
- Fig. 6: eine Draufsicht auf Komponenten einer Einrichtung zum Steuern eines Luftstroms;
- Fig. 7: eine weitere vergrößerte perspektivische Darstellung von Komponenten einer Einrichtung zum Steuern eines Luftstroms;
- Fig. 8: eine weitere Draufsicht auf Komponenten einer Einrichtung zum Steuern eines Luftstroms;

- Fig. 9: eine schematische Draufsicht auf Lamellen einer Einrichtung zum Steuern eines Luftstroms in einer Schließstellung;
- Fig. 10: eine weitere vergrößerte perspektivische Darstellung von Komponenten einer Einrichtung zum Steuern eines Luftstroms mit einer verschwenkten ersten Steuerlamelle; und
- Fig. 11: eine perspektivische Darstellung einer Einrichtung zum Steuern eines Luftstroms einer weiteren Ausführungsform.

In den Figuren mit gleichen Bezugszeichen versehene Teile entsprechen im Wesentlichen einander, sofern nichts anderes angegeben ist. Ferner wird darauf verzichtet, Bestandteile der Einrichtung 10 zum Steuern eines Luftstroms zu beschreiben, die nicht wesentlich zum Verständnis der hierin offenbarten technischen Lehre sind.

Die in den Figuren gezeigten Einrichtungen 10 können beispielsweise im Bereich einer Mittelkonsole eines Fahrzeugarmaturenbretts angeordnet sein. Die Einrichtungen 10 sind dabei als sogenannte Breitbandausströmer ausgebildet. Das bedeutet, dass die Einrichtungen 10 in einem Luftaustrittsbereich 14 eine größere Breite als Höhe aufweisen. Vorzugsweise weist der Luftaustrittsbereich 14 eine Breite von über 200 mm vorzugsweise eine Breite von über 300 mm auf.

In der nachfolgenden Beschreibung werden die Begriffe "Verdrehen oder Drehen" und "Verschwenken oder Schwenken" mitunter als Synonyme verwendet. So sind bspw. verschwenkbare Lamellen auch um Ihre Schwenkachsen drehbar und ein verdrehbar gelagertes Hebelelement kann auch um seine Drehachse verschwenkt werden.

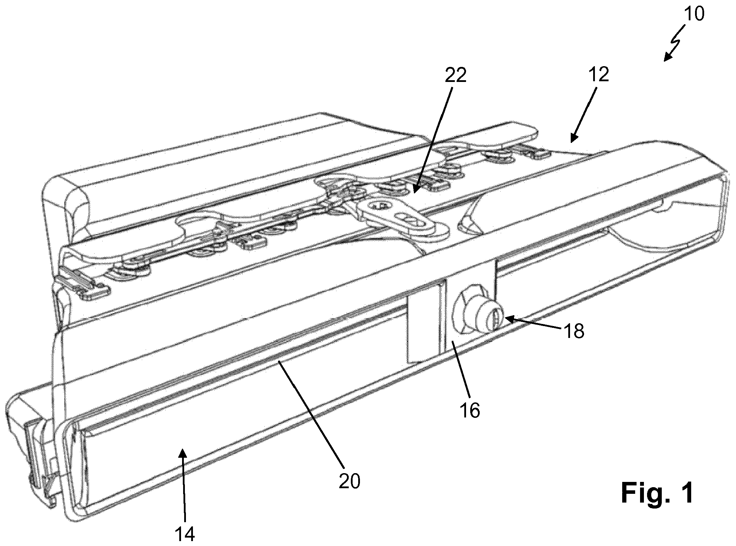

Die Einrichtung 10 von Fig. 1 weist ein Gehäuse 12 auf. Das Gehäuse 12 weist an seiner Vorderseite eine Öffnung auf, welche den Luftaustrittsbereich 14 definiert. Im Luftaustrittsbereich 14 ist ein Lagersteg 16 angeordnet, der sich im Wesentlichen mittig durch den Luftaustrittsbereich 14 erstreckt. An dem Lagersteg 16 ist ein Bedienelement 18 angeordnet. Das Bedienelement 18 dient dazu eine im Wesentlichen horizontal verlaufende erste Steuerlamelle 20 zu verschwenken und über eine Hebelanordnung 22 zweite Lamellen 24 (in Fig. 1 nicht dargestellt) zu verschwenken, um die über den Luftaustrittsbereich 14 austretende Luft entsprechend abzulenken. Zusätzlich kann über das Bedienelement 18 die Menge der über den Luftaustrittsbereich 14 ausströmenden Luft eingestellt werden. Luftmenge und -richtung können nicht unabhängig voneinander gesteuert werden.

Das Bedienelement 18 ist sowohl um eine parallel zur Längsachse der ersten Steuerlamelle 20 verlaufende Achse schwenkbar und kann zudem über einen Bedienknopf 26 quer zur Längsachse der ersten Steuerlamelle 20 verdreht werden. Das Verdrehen oder Drehen des Bedienknopfs 26 bewirkt ein Verschwenken oder Schwenken der zweiten Lamellen 24 über die Hebelanordnung 22. Wird der Bedienknopf 26 über ein bestimmtes Maß hinaus verdreht, so werden die zweiten Lamellen 24 so weit verschwenkt, dass diese im Wesentlichen in einer Ebene liegen und damit den Luftkanal durch das Gehäuse 12 hindurch verschließen.

An seiner Rückseite weist das Gehäuse 12 einen nicht weiter bezeichneten Anschluss an einen Luftzuführkanal auf. Der Luftzuführkanal kann beispielweise mit einer Klimaanlage gekoppelt sein, so dass klimatisierte Luft aus der Einrichtung 10 über den Luftaustrittsbereich 14 ausströmen kann. Die in den Fig. 1 bis 11 gezeigten Einrichtungen 10 können auch als Luftausströmer oder Luftdüsen bezeichnet werden.

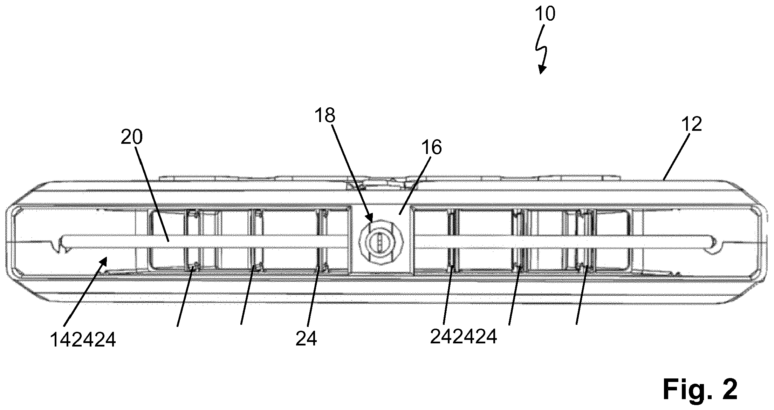

Fig. 2 zeigt eine Vorderansicht einer Einrichtung 10 zum Steuern eines Luftstroms. Der Lagersteg 16 ist in der Mitte der Luftaustrittsbereichs 14 angeordnet. Hierüber erfolgt eine Aufteilung des Luftaustrittsbereichs 14 in zwei Teilbereiche, wobei eine erste Gruppe von zweiten Lamellen 24 links des Lagerstegs 16 und eine zweite Gruppe von zweiten Lamellen 24 rechts des Lagerstegs 16 angeordnet ist. Das Bedienelement 18 ist über die Hebelanordnung 22 mit einer zweiten Steuerlamelle 70 (in Fig. 2 nicht dargestellt) gekoppelt, welche sich im Wesentlichen im Bereich des Lagerstegs 16 hinter diesem und hinter der ersten Steuerlamelle 20 befindet. Die zweite Steuerlamelle 70 ist über eine erste Koppelstange 66 mit den zweiten Lamellen 24 der ersten Gruppe von Lamellen 24 und über eine zweite Koppelstange 68 mit der zweiten Gruppe von Lamellen 24 gekoppelt.

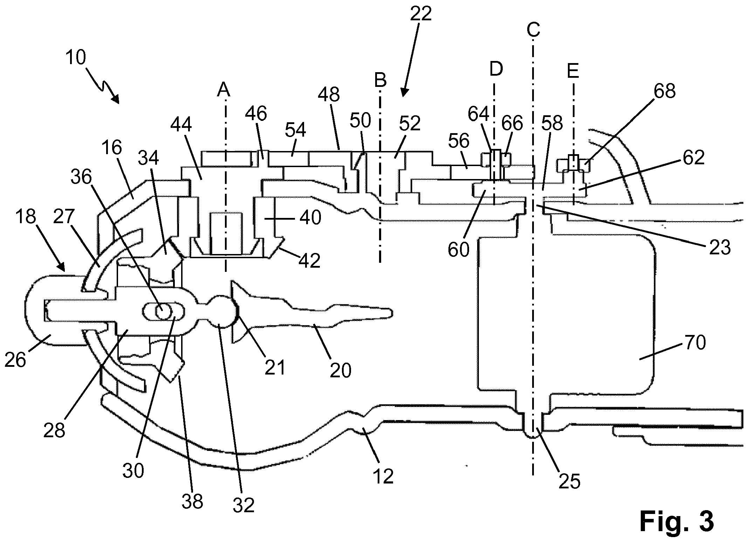

Fig. 3 zeigt einen Schnitt durch einen Einrichtung 10 zum Steuern eines Luftstroms. Fig. 3 zeigt die Ausbildung und Anordnung des Bedienelementes 18, der Hebelanordnung 22 sowie die Kopplung mit der ersten Steuerlamelle 20 und der zweiten Steuerlamelle 70.

Das Bedienelement 18 weist den Bedienknopf 26 auf, der mit einem Steuerabschnitt 28 verbunden ist. Der Bedienknopf 26 ist in einer Öffnung in einer Leiste 27 gelagert. Die Leiste 27 ist gebogen ausgeführt und dient als Führung für das Bedienelement 18 beim Verschwenken oder Schwenken nach oben und unten (Fig. 3). Der Steuerabschnitt 28 weist eine dritte Führungskulisse 30 auf. In der dritten Führungskulisse 30 ist ein als Stift ausgebildetes drittes Koppelglied 36 eines ersten Kegelrades 34 aufgenommen. Der Steuerabschnitt 28 weist an seinem dem Bedienknopf 26 gegenüberliegendem Ende einen Kugelkopf 32 auf. Dieser Kugelkopf 32 ist in einer Kugelpfanne 21 der ersten Steuerlamelle aufgenommen. Die Kugelpfanne 21 ist anders als aufgrund der Schnittdarstellung von Fig. 3 dargestellt so ausgebildet, dass sie den Kugelkopf 32 soweit umgibt, dass der Kugelkopf 32 nicht aus der Kugelpfanne 32 herausbewegt werden kann. Die Kugelpfanne 21 umgreift den Kugelkopf 32, lässt aber ein Verschwenken oder Schwenken des Bedienelements 18 zu der ersten Steuerlamelle 20 zu.

Um die erste Steuerlamelle 20 zu verschwenken, kann der Bedienknopf 26 mit Blick auf Fig. 3 nach oben oder unten bewegt werden, wobei dies ein Verschwenken oder Schwenken des Steuerabschnitts 28 um das dritte Koppelglied 36 bewirkt. Entsprechend wird der Kugelkopf 32 nach unten oder oben verschwenkt, was aufgrund der Lagerung in der Kugelpfanne 21 ein korrespondierendes bzw. entgegengesetzt zum Verschwenken oder Schwenken des Bedienknopfes 26 gerichtetes Verschwenken oder Schwenken der ersten Steuerlamelle 20 bewirkt. Die erste Steuerlamelle 20 wird daher gegenläufig zum Verschwenken oder Schwenken des Bedienknopfes 26 verschwenkt. Die Ausbildung der dritten Führungskulisse 30 als Langloch stellt sicher, dass ein Verschwenken oder Schwenken des Bedienelementes 18 ohne ein Verkanten durchgeführt werden kann. Da die erste Steuerlamelle 20 in Bezug auf Ihre Längsachse fest in dem Gehäuse 12 drehbar gelagert ist, ergibt sich beim Verschwenken oder Schwenken des Bedienelementes 18 eine Verlagerung des Steuerabschnitts 28. Diese Verlagerung wird über die dritte Führungskulisse 30 ausgeglichen. Zusätzlich kann das Bedienelement 18 unabhängig von der Ausrichtung der ersten Steuerlamelle 20 um die Längsachse des Steuerabschnitts 28 verdreht werden. Da der Kugelkopf 32 und die Kugelpfanne 21 keine Kanten aufweisen, kommt es auch bei einem Verdrehen oder Drehen des Bedienelementes 18 zu keinem Verkanten oder Blockieren mit Teilen der Einrichtung 10. Wird das Bedienelement 18 um die Längsachse des Steuerabschnitts 28 verdreht, wird das erste Kegelrad 34 in entsprechender Weise verdreht. Das Kegelrad 34 ist hierzu an dem Lagersteg 16 drehbar gelagert.

Das erste Kegelrad 34 weist eine mittige Öffnung auf, durch welche der Steuerabschnitt 28 hindurchgeht. Das dritte Koppelglied 36 ist dabei fest mit dem ersten Kegelrad 34 verbunden und erstreckt sich durch die Öffnung des ersten Kegelrads 34. Die Öffnung des ersten Kegelrads 34 ist an ihren Außenseiten abgerundet ausgebildet, damit auch bei einem verschwenkten Bedienelement 18 eine Rotation des Bedienelementes 18 erfolgen kann. Das erste Kegelrad 34 weist einen umlaufenden Zahnradabschnitt 38 auf, der mit einem umlaufenden Zahnradabschnitt 42 eines zweiten Kegelrads 40 in Eingriff steht. Die Zähne des Zahnradabschnittes 38 kämmen mit den Zähnen des Zahnradabschnittes 42. Das zweite Kegelrad 40 ist über ein zweites Koppelglied 44 an dem Gehäuse 12 drehbar gelagert. Hierzu weist das zweite Kegelrad 40 eine innere Öffnung mit abgestuften Bereichen für hakenartige Ansätze des zweiten Koppelgliedes 44 auf. Das zweite Koppelglied 44 und das zweite Kegelrad 40 sind über die hakenförmigen Elemente und korrespondierenden Abschnitte des zweiten Kegelrads 40 fest miteinander verbunden, sodass eine Rotation des zweiten Kegelrads 40 eine entsprechende Rotation des zweiten Koppelgliedes 44 um die Drehachse A bewirkt. Das zweite Koppelglied 44 weist einen umlaufenden Abschnitt auf, der größer als eine Öffnung in dem Gehäuse 12 ist, sodass die Position des zweiten Koppelgliedes 44 in der Öffnung über die Rastverbindung mit dem zweiten Kegelrad 40 sichergestellt ist. Die Öffnung in dem Gehäuse 12 so groß, dass das zweite Koppelglied 44 sich vorzugsweise spielfrei um die Drehachse A drehen kann.

An dem oberen Abschnitt weist das zweite Koppelglied 44 einen exzentrisch zur Drehachse A angeordneten Mitnehmer 46 auf. Der Mitnehmer 46 ist in einer ersten Führungskulisse 54 eines Hebelelementes 48 aufgenommen. Das Hebelelement 48 ist Teil der Hebelanordnung 22 und ebenfalls über eine Rastanordnung mit beispielsweise drei Rasthaken 50 um die Drehachse B drehbar am Gehäuse 12 gelagert. Das Gehäuse 12 weist drei um die Drehachse B angeordnete Rasthaken 50 auf, die in eine Öffnung 52 des Hebelelementes 48 ragen und einen Vorsprung hintergreifen. Das Hebelelement 48 kann durch Aufsetzen auf die Rasthaken 50 über eine Schnappverbindung mit dem Gehäuse 12 verbunden werden. Das Hebelelement 48 weist an einem der ersten Führungskulisse 54 gegenüberliegenden Abschnitt eine zweite Führungskulisse 56 auf, in der ein zweiter Mitnehmer 64 aufgenommen ist. Der zweite Mitnehmer 64 ist entweder mit einem ersten Koppelglied 58 verbunden oder Teil des ersten Koppelgliedes 58. Das erste Koppelglied 58 ist über einen Abschnitt 23 mit der zweiten Steuerlamelle 70 verbunden. Die zweite Steuerlamelle 70 weist einen Lagerzapfen 25 auf, der in einer unteren Öffnung im Gehäuse 12 drehbar gelagert ist. Der Abschnitt 23 dient ebenfalls als Lagerzapfen für die zweite Steuerlamelle 70. Die zweite Steuerlamelle 70 kann um eine durch den Abschnitt 23 und den Lagerzapfen 25 verlaufende Schwenkachse C verdreht werden. Das erste Koppelglied 58 weist einen ersten Endabschnitt 60 und einen gegenüberliegenden zweiten Endabschnitt 62 auf. In dem ersten Endabschnitt 60 ist der zweite Mitnehmer 64 angeordnet, der in einer Öffnung einer ersten Koppelstange 66 aufgenommen ist. Im zweiten Endabschnitt 62 weist das erste Koppelglied 58 einen weiteren Mitnehmer auf, der in einer Öffnung einer zweiten Koppelstange 68 aufgenommen ist. Der erste Mitnehmer 64 kann in der Öffnung der ersten Koppelstange 66 um die Achse D und der weitere Mitnehmer in der Öffnung der zweiten Koppelstange 68 um die Achse E verschwenkt werden.

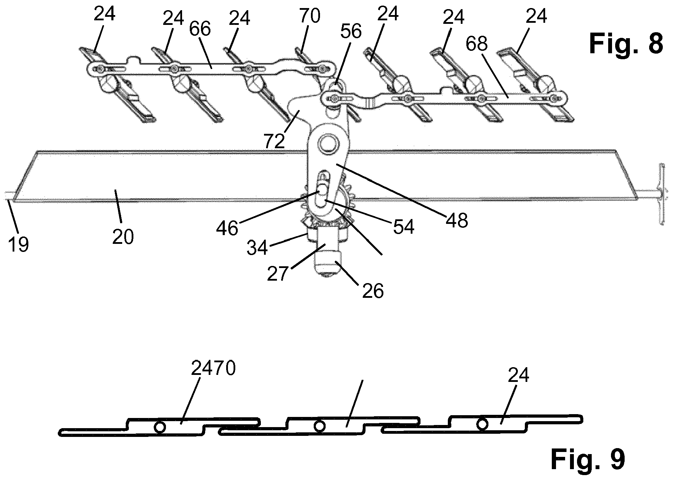

Wird das Bedienelement 18 über den Bedienknopf 26 um die Längsachse des Steuerabschnitts 28 verdreht, so bewirkt dies ein Verdrehen oder Drehen des ersten Kegelrads 34. In Folge dessen wird das zweite Kegelrad 44 verdreht. In entsprechender Weise wird über die direkte Koppelung des zweiten Koppelglieds 44 mit dem zweiten Kegelrad 40 der erste Mitnehmer 46 um die Drehachse A verdreht, was in einem Verdrehen oder Drehen des Hebelelementes 48 resultiert. Dementsprechend wird der zweite Mitnehmer 64 durch seine Lagerung in der zweiten Führungskulisse 56 bewegt, was in einem Verschwenken oder Schwenken der zweiten Steuerlamelle 70 resultiert. Über die Kopplung mit der ersten Koppelstange 66 erfolgt ein synchrones Verschwenken oder Schwenken der ersten Gruppe von Lamellen 24. Zudem erfolgt ein Verschwenken oder Schwenken des weiteren Mitnehmers im zweiten Endabschnitt 62, sodass auch die zweite Gruppe von Lamellen 24 über die Kopplung mit der zweiten Koppelstange 68 in synchroner Weise verschwenkt wird. Wird das Bedienelement 18 über den Bedienknopf 26 weiter verdreht, können die zweite Steuerlamelle 70 und die zweiten Lamellen 24 in eine Schließposition verbracht werden, in der sie im Wesentlichen die in Fig. 9 gezeigte Stellung einnehmen. Über die Hebelanordnung 22 werden die Lamellen 24 und die zweite Steuerlamelle 70 in ihre Schließposition gedrückt. Bei den aus dem Stand der Technik bekannten Luftausströmern mit als Schließklappen ausgebildeten Vertikallamellen werden die Vertikallamellen in der Regel über ein an einer Steuerlamelle gelagertes Bedienelement gezogen. Die Hebelanordnung 22 bewirkt jedoch ein Drücken, sodass eine größere Kraft bzw. ein größeres Moment auf die Lamellen 24 und die zweite Steuerlamelle 70 aufgebracht wird. Hierüber kann ein sicheres Abschließen des Luftkanals erreicht werden.

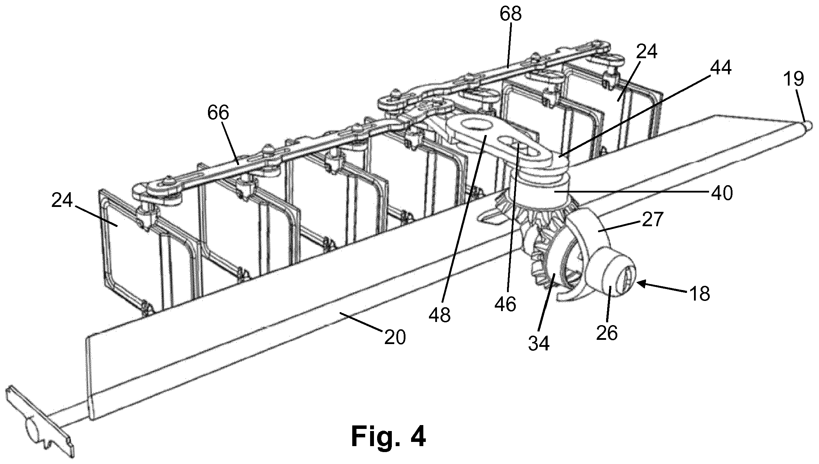

Fig. 4 zeigt eine perspektivische Darstellung von Komponenten einer Einrichtung 10 zum Steuern eines Luftstroms. Bei der in Fig. 4 gezeigten Darstellung ist das Gehäuse 12 nicht dargestellt. Die Steuerlamelle 20 ist um Lagerzapfen 19 drehbar im Gehäuse 12 aufgenommen. Die Schwenkachse der ersten Steuerlamelle 20 verläuft hierbei an ihrer Vorderkante. Die erste Steuerlamelle 20 weist im Bereich des zweiten Kegelrads 40 einen Einschnitt auf, der sicherstellt dass auch bei einer verschwenkten ersten Steuerlamelle 20 in einer Maximalstellung kein Kontakt zwischen der Oberfläche der ersten Steuerlamelle 20 und dem zweiten Kegelrad 40 besteht.

Fig. 4 verdeutlicht die Ausbildung der Leiste 27 und die Kopplung der Kegelräder 34 und 40 mit den Bestandteilen der Hebelanordnung 22. Wird das zweite Kegelrad 40 aufgrund einer Rotation des Bedienelements 18 über das erste Kegelrad 34 verdreht, bewegt sich der erste Mitnehmer 46 um die in Fig. 4 nicht dargestellte Drehachse A. Entsprechend wird das Hebelelement 48 um die ebenfalls nicht dargestellte Drehachse B verdreht, was in einer Verlagerung des zweiten Mitnehmers 64 resultiert. Entsprechend wird dabei die zweite Steuerlamelle 70 verschwenkt. Durch die direkte Verbindung der zweiten Steuerlamelle 70 mit dem ersten Koppelglied 58 und der exzentrischen Anordnung des zweiten Mitnehmers 64 sowie des weiteren Mitnehmers, die wiederrum mit der ersten Koppelstange 66 und der zweiten Koppelstange 68 gekoppelt sind, erfolgt ein Verschwenken oder Schwenken der ersten Gruppe von Lamellen 24 und der zweiten Gruppe von Lamellen 24.

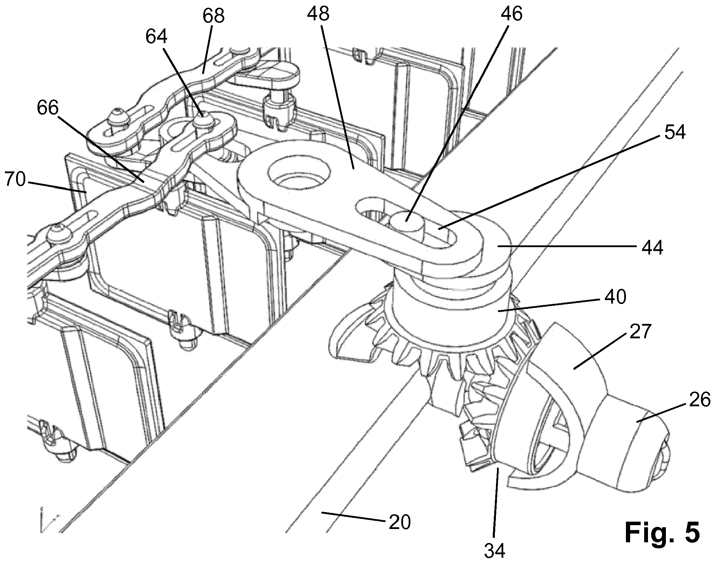

Fig. 5 zeigt eine vergrößerte perspektivische Darstellung von Komponenten einer Einrichtung 10 zum Steuern eines Luftstroms. Fig. 5 zeigt exemplarisch eine Ausbildung des zweiten Mitnehmers 64 und des weiteren Mitnehmers. Wird das Hebelelement 48 um die Drehachse B verdreht, wird beispielsweise die erste Koppelstange 66 nach links und entsprechend die zweite Koppelstange 68 nach rechts bewegt. Die erste Koppelstange 66 und die zweite Koppelstange 68 führen dabei stets gegenläufige Bewegungen aus. Entweder werden die erste Koppelstange 66 und die zweite Koppelstange 68 aufeinander zu bewegt oder voneinander weg bewegt. Vorzugsweise ist die Einrichtung 10 so ausgebildet, dass die zweiten Lamellen 24 und die zweite Steuerlamelle 70 sich dann in ihrer Schließposition befinden, wenn die erste Koppelstange 66 und die zweite Koppelstange 68 voneinander weg bewegt werden. Hierbei werden die erste Koppelstange 66 und die zweite Koppelstange 68 in ihre Extremstellungen gedrückt. Gegenüber einem Ziehen oder Mitführen von Lamellen, wie dies aus dem Stand der Technik bekannt ist, können die Lamellen 24 und die zweite Steuerlamelle 70 daher mit einem größeren Druck bzw. Moment in ihre Schließstellung verbracht werden. Wie in Fig. 5 dargestellt, können auch die zweiten Lamellen 24 einen Abschnitt aufweisen, der mit einem Lagerzapfen verbunden ist, wobei an diesem Abschnitt ein exzentrisch zur Schwenkachse der zweiten Lamellen 24 angeordneter Mitnehmer vorgesehen ist, welche Mitnehmer in den entsprechenden Öffnungen der ersten Koppelstange 66 und der zweiten Koppelstange 68 aufgenommen sind.

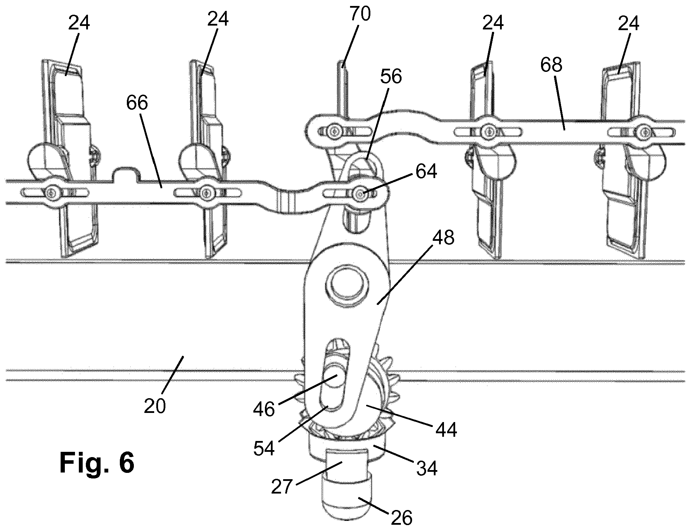

Fig. 6 zeigt eine Draufsicht auf Komponenten einer Einrichtung 10 zum Steuern eines Luftstroms. Fig. 6 verdeutlich die Funktionsweise der Einrichtung 10. Wird der erste Mitnehmer 46 weiter nach links um die Drehachse A verdreht, so erfolgt eine Rotation des ersten Mitnehmers 46 gegen den Uhrzeigersinn, wobei das Hebelelement 48 im Uhrzeigersinn (Fig. 6) verdreht wird. Dementsprechend wird der zweite Mitnehmer 64 nach rechts im Uhrzeigersinn bewegt und die zweiten Lamellen 24 und die zweite Steuerlamelle 70 gegen den Uhrzeigersinn verschwenkt. Wird der erste Mitnehmer 46 im Uhrzeigersinn verdreht, erfolgt ein Verdrehen oder Drehen bzw. Verschwenken oder Schwenken des Hebelelementes 48 gegen den Uhrzeigersinn, was wiederum zu einer Verlagerung der ersten Koppelstange 66 nach links und der zweiten Koppelstange 68 nach rechts führt. Die letztgenannte Verlagerung führt in ihrer maximalen Auslenkung zu der Schließposition der zweiten Steuerlamelle 70 und der zweiten Lamellen 24, wie diese in Fig. 9 gezeigt ist.

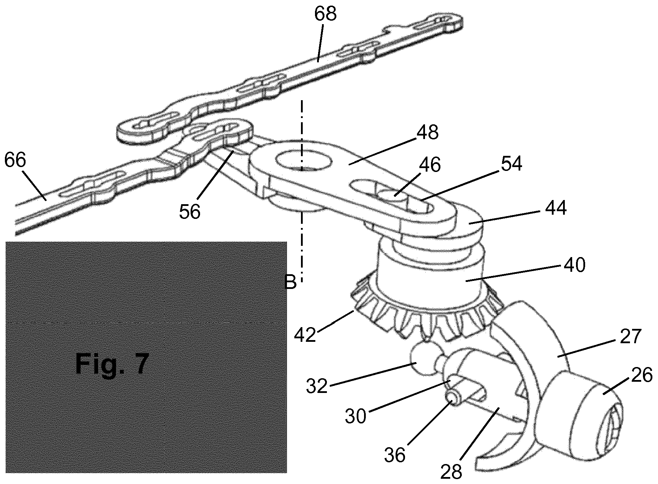

Fig. 7 zeigt eine weitere vergrößerte perspektivische Darstellung von Komponenten einer Einrichtung 10 zum Steuern eines Luftstroms. Fig. 7 zeigt die Ausbildung des Kugelkopfs 32 und die Aufnahme des als Stift ausgebildeten dritten Koppelgliedes 36 innerhalb der dritten Führungskulisse 30.

Fig. 8 zeigt eine weitere Draufsicht auf Komponenten einer Einrichtung 10 zum Steuern eines Luftstroms. In der Darstellung von Fig. 8 sind die zweiten Lamellen 24 und die zweite Steuerlamelle 70 verschwenkt dargestellt. Hierzu wurde das Hebelelement 48 im Uhrzeigersinn verschwenkt.

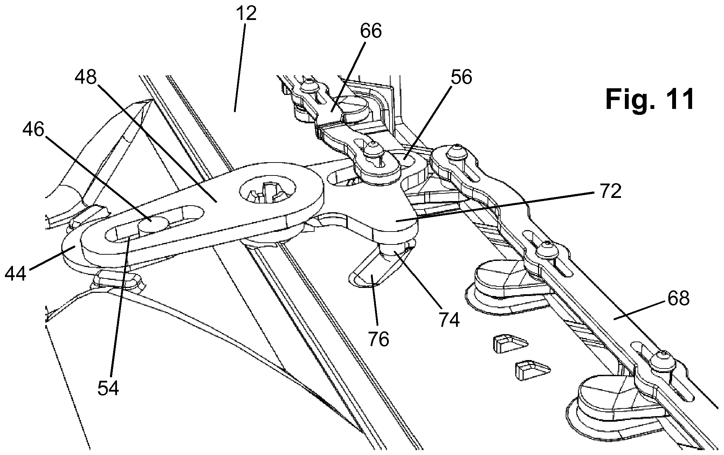

Fig. 8 zeigt ferner einen Anschlag 72, der beispielsweise über eine Führung 76 ein Verschwenken oder Schwenken bzw. ein Verdrehen oder Drehen des Hebelelementes 48 beschränken kann. Fig. 11 zeigt dabei eine Ausbildung einer Möglichkeit zur Begrenzung des Verschwenkens oder Schwenkens des Hebelelementes 48.

Fig. 9 zeigt eine schematische Draufsicht auf Lamellen 24 und eine zweite Steuerlamelle 70 einer Einrichtung 10 zum Steuern eines Luftstroms in einer Schließstellung. Die Lamellen 24 und die zweite Steuerlamelle 70 sind stufenförmig ausgebildet. Durch die stufenförmige Ausbildung liegen die zweiten Lamellen 24 und die zweite Steuerlamelle 70 nicht nur entlang der Berührungskanten aneinander an, sondern können vorteilhafterweise flächig aneinander anliegen. Hierüber wird das Durchströmen von Leckluft bei einem geschlossenen Luftkanal weiter verhindert. Ferner können in weiteren Ausführungsformen die Anlagekanten oder auch die Anlageflächen (Fig. 9) mit einem Dichtmittel versehen sein. Beispielsweise eignen sich hierfür Schäume oder um die Lamellen umlaufend angeordnet Dichtringe aus Gummi. Darüber hinaus kann das Gehäuse 12 umlaufende Dichtmittel aufweisen, die bei einer Schließstellung der Lamellen 24 und 70, wie in Fig. 9 gezeigt, das Gehäuse 12 gegenüber den Lamellen 24 und 70 abdichten.

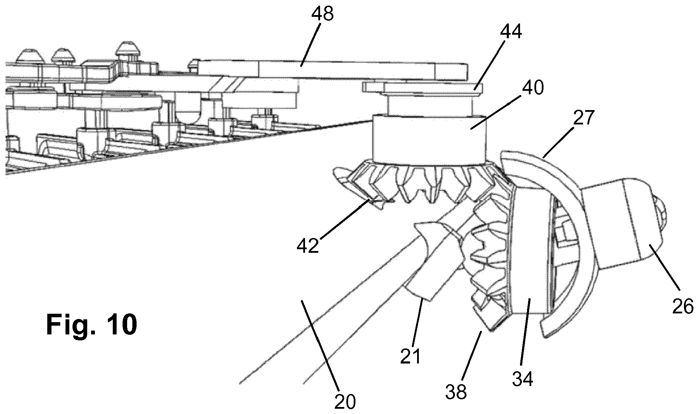

Fig. 10 zeigt eine weitere vergrößerte perspektivische Darstellung von Komponenten einer Einrichtung 10 zum Steuern eines Luftstroms mit einer verschwenkten ersten Steuerlamelle 20. Wie in Fig. 10 dargestellt, wird die erste Steuerlamelle 20 gegenläufig zum Bedienelement 18 verschwenkt. Aufgrund der dritten Führungskulisse 30 (in Fig. 10 nicht dargestellt) kann ein Verkippen bzw. Verschwenken oder Schwenken des Bedienelementes 18 nach oben und unten durchgeführt werden, ohne dass dies Auswirkungen auf die Bedienung der zweiten Lamellen 24 und der zweiten Steuerlamelle 70 und auf ein Verdrehen oder Drehen des ersten Kegelrades 34 hat. Die Leiste 27 ist so ausgebildet, dass der Bedienknopf 26 innerhalb der Öffnung der Leiste 27 verdreht werden kann. Dadurch ändert sich die Ausrichtung der Leiste 27 beim Verdrehen oder Drehen des Bedienelementes 18 nicht. Die Leiste 27 kann dabei lediglich nach oben und unten verschwenkt werden, stört aber den weiteren Betrieb nicht bzw. muss die Leiste 27 nicht mit verdreht werden.

Fig. 11 zeigt eine perspektivische Darstellung einer Einrichtung 10 zum Steuern eines Luftstroms einer weiteren Ausführungsform mit einem Anschlag 72. An einem dem Gehäuse 12 zugewandten Ende des Anschlags 72 ist ein Stift 74 angeordnet. Der Stift 74 ist innerhalb einer Führung 76 aufgenommen. Die Führung 76 gibt vor, in wie weit das Hebelelement 48 verschwenkt werden kann. Hierüber wird auf einfache Art und Weise sichergestellt, dass kein übermäßiger Druck auf die Lamellen 24 und die zweite Steuerlamelle 70 ausgeübt werden kann, was beispielsweise zu einer Beschädigung von Komponenten der Einrichtung 10 führen könnte.

Wie in den vorstehend genannten beispielhaften Ausführungen gezeigt, befinden sich die wesentlichen Komponenten der Kinematik zum Verschwenken oder Schwenken der zweiten Lamellen 24 und der zweiten Steuerlamelle 70, nämlich mindestens das zweite Koppelglied 44, das Hebelelement 48, das erste Koppelglied 58 sowie die erste Koppelstange 66 und die zweite Koppelstange 68 außerhalb des Gehäuses 12. Daher erfolgt über diese Komponenten keine Beeinflussung und Ablenkung bzw. Verwirbelung der über den Luftaustrittsbereich 14 ausströmenden Luft im Luftkanal. Ferner muss die zweite Steuerlamelle 70 keinen Ausschnitt oder sonstige konstruktive Merkmale aufweisen, welche eine zusätzliche Verwirbelung der Luft bewirken oder in einer Schließstellung der Lamellen einen Leckluftstrom aufgrund eines Ausschnitts zulassen. Die zweite Steuerlamelle 70 kann innerhalb des Luftkanals genauso ausgebildet sein, wie die restlichen zweiten Lamellen 24. Darüber hinaus weist die erste Steuerlamelle 20 keine Aufnahmen, Führungen oder sonstige Mittel auf, welche ebenfalls entweder den Querschnitt der Steuerlamelle 20 vergrößern oder in Anformungen bzw. Einrichtungen an der ersten Steuerlamelle 20 resultieren würden. Dadurch wird ein verbessertes Verschließen des Luftkanals über die zweiten Lamellen 24 und die zweite Steuerlamelle 70 bereitgestellt, wobei zusätzlich keine Kinematik-Bauteile innerhalb des Luftkanals angeordnet sind.

### Bezugszeichenliste

- 10: Einrichtung
- 12: Gehäuse
- 14: Luftaustrittsbereich
- 16: Lagersteg
- 18: Bedienelement
- 19: Lagerzapfen
- 20: Steuerlamelle
- 21: Kugelpfanne
- 22: Hebelanordnung
- 23: Abschnitt
- 24: Lamelle
- 25: Lagerzapfen
- 26: Bedienknopf
- 27: Leiste
- 28: Steuerabschnitt
- 30: Führungskulisse
- 32: Kugelkopf
- 34: Kegelrad
- 36: Koppelglied
- 38: Zahnradabschnitt
- 40: Kegelrad
- 42: Zahnradabschnitt
- 44: Koppelglied
- 46: Mitnehmer
- 48: Hebelelement
- 50: Rasthaken
- 52: Öffnung
- 54: Führungskulisse
- 56: Führungskulisse
- 58: Koppelglied
- 60: Endabschnitt
- 62: Endabschnitt
- 64: Mitnehmer
- 66: Koppelstange
- 68: Koppelstange
- 70: Steuerlamelle
- 72: Anschlag
- 74: Stift
- 76: Führung

- A: Drehachse
- B: Drehachse
- C: Schwenkachse
- D: Achse
- E: Achse

## Patentansprüche

1. Einrichtung zum Steuern eines Luftstroms, mit mindestens einer verschwenkbar in einem Gehäuse (12) gelagerten ersten Steuerlamelle (20) und mit orthogonal zur ersten Steuerlamelle (20) verlaufenden und verschwenkbar im Gehäuse (12) gelagerten zweiten Lamellen (24), wobei über die erste Steuerlamelle (20) und die zweiten Lamellen (24) die Richtung des aus dem Gehäuse (12) austretenden Luftstroms und über die zweiten Lamellen (24) die Menge der ausströmenden Luft einstellbar sind, **dadurch gekennzeichnet, dass** die Einrichtung ein Bedienelement (18), das über einen Lagersteg (16) an einem Luftaustrittsbereich (14) des Gehäuses (12) angeordnet ist, umfasst, wobei
- das Bedienelement (18) orthogonal zur Längsachse der ersten Steuerlamelle (20) verschwenkbar an dem Lagersteg (16) angeordnet und mit einem am Lagersteg (16) drehbar gelagerten ersten Kegelrad (34) und mit der ersten Steuerlamelle (20) gekoppelt ist,
- das erste Kegelrad (34) mit einem zweiten Kegelrad (40) in Eingriff steht,
- das zweite Kegelrad (40) orthogonal zu dem ersten Kegelrad (34) drehbar am Gehäuse (12) angeordnet ist,
- das zweite Kegelrad (40) mit einer Hebelanordnung (22) gekoppelt ist, und
- die Hebelanordnung (22) mindestens ein verdrehbar gelagertes erstes Koppelglied (58) aufweist, das mit mindestens einer ersten Koppelstange (66) und die mindestens eine erste Koppelstange (66) mit den zweiten Lamellen (24) gekoppelt ist.

2. Einrichtung nach Anspruch 1, wobei eine der zweiten Lamellen (24) als zweite Steuerlamelle (70) ausgebildet und das erste Koppelglied (58) mit der zweiten Steuerlamelle (70) verbunden ist, wobei sich zu beiden Seiten der zweiten Steuerlamelle (70) parallel angeordnete zweite Lamellen (24) erstrecken, wobei das erste Koppelglied (58) an einem ersten Endabschnitt (60) mit der ersten Koppelstange (66) und an einem zweiten Endabschnitt (62) mit einer zweiten Koppelstange (68) verdrehbar verbunden ist und eine erste Gruppe von zweiten Lamellen (24) mit der ersten Koppelstange (66) und eine zweite Gruppe von zweiten Lamellen (24) mit der zweiten Koppelstange (68) verbunden sind.

3. Einrichtung nach Anspruch 2, wobei das erste Koppelglied (58) gemeinsam mit der zweiten Steuerlamelle (70) um deren Schwenkachse (C) verdrehbar und beabstandet zur Schwenkachse (C) der zweiten Steuerlamelle (70) mit der ersten Koppelstange (66) und der zweiten Koppelstange (68) verbunden ist.

4. Einrichtung nach Anspruch 2 oder 3, wobei die Hebelanordnung (22)
- ein zweites drehbar mit dem zweiten Kegelrad (40) gekoppeltes Koppelglied (44) mit einem exzentrisch zur Drehachse (A) des zweiten Koppelglieds (44) angeordneten ersten Mitnehmer (46), und
- ein drehbar am Gehäuse (12) angeordnetes Hebelelement (48) mit einer ersten Führungskulisse (54) und einer zweiten Führungskulisse (56), die jeweils beabstandet zur Drehachse (B) des Hebelelements (48) an gegenüberliegenden Abschnitten angeordnet sind, aufweist,
wobei der erste Mitnehmer (46) in der ersten Führungskulisse (54) und ein zweiter Mitnehmer (64) in der zweiten Führungskulisse (56) führbar gelagert ist, und wobei der zweite Mitnehmer (64) im ersten Endabschnitt (60) des ersten Koppelglieds (58) angeordnet und mit der ersten Koppelstange (66) verdrehbar verbunden ist.

5. Einrichtung nach Anspruch 4, wobei das Hebelelement (48) im Bereich der zweiten Führungskulisse (56) mindestens einen Anschlag (72) aufweist, der
- über die erste Koppelstange (66) und/oder die zweite Koppelstange (68), oder
- über eine Führung (76) am Gehäuse (12) das Verschwenken oder Schwenken der zweiten Lamellen (24) begrenzt.

6. Einrichtung nach einem der Ansprüche 1 bis 5, wobei das Bedienelement (18) eine dritte Führungskulisse (30) aufweist, die sich entlang der Längsachse des Bedienelements (18) erstreckt, und in der dritten Führungskulisse (30) ein drittes Koppelglied (36) angeordnet ist, das mit dem ersten Kegelrad (34) verbunden ist.

7. Einrichtung nach einem der Ansprüche 1 bis 6, wobei das Bedienelement (18) einen kugelartigen Endabschnitt aufweist, der in einer Kugelpfanne (21) der ersten Steuerlamelle (20) aufgenommen ist.

8. Einrichtung nach einem der Ansprüche 1 bis 7, wobei die zweiten Lamellen (24) einen Querschnitt mit mindestens einer Abstufung aufweisen.

9. Einrichtung nach einem der Ansprüche 1 bis 8, wobei die zweiten Lamellen (24) mindestens an ihren parallel zur Schwenkachse (C) verlaufenden Außenkanten eine Dichtung aufweisen und/oder das Gehäuse (12) im Bereich der zweiten Lamellen (24) mindestens an parallel zur Schwenkachse (C) der zweiten Lamellen (24) verlaufenden inneren Seitenwänden eine Dichtung aufweist.

10. Einrichtung nach einem der Ansprüche 1 bis 9, wobei mindestens das Hebelelement (48), die erste Koppelstange (66) und/oder die zweite Koppelstange (68) und das erste Koppelglied (58) außerhalb des Gehäuses (12) angeordnet sind.

11. Einrichtung nach einem der Ansprüche 1 bis 10, wobei die erste Steuerlamelle (20) mit mindestens einer weiteren verschwenkbar am Gehäuse (12) gelagerten Lamelle gekoppelt ist.

## Claims

1. Device for controlling an air flow, comprising at least one first control slat (20) pivotably mounted in a housing (12) and second slats (24) extending orthogonally to the first control slat (20) and pivotably mounted in the housing (12), wherein the direction of the air flow exiting from the housing (12) is settable by way of the first control slat (20) and the second slats (24) and the amount of the exiting air is settable by way of the second slats (24), **characterised in that** the device comprises a control element (18) arranged by way of a mounting web (16) at an air outlet region (14) of the housing (12), wherein
- the control element (18) is arranged at the mounting web (16) to be pivotable orthogonally to the longitudinal axis of the first control slat (20) and is coupled with a first bevel gear (34), which is rotatably mounted at the mounting web (16), and with the first control slat (20),
- the first bevel gear (34) is disposed in engagement with a second bevel gear (40),
- the second bevel gear (40) is rotatably arranged at the housing (12) orthogonally to the first bevel gear (34),
- the second bevel gear (40) is coupled with a lever arrangement (22) and
- the lever arrangement (22) comprises at least one rotatably mounted first coupling element (58) coupled with at least one first coupling rod (66) and the at least one first coupling rod (66) is coupled with the second slats (24).

2. Device according to claim 1, wherein one of the second slats (24) is constructed as a second control slat (70) and the first coupling element (58) is connected with the second control slat (70), wherein parallelly arranged second slats (24) extend on either side of the second control slat (70), wherein the first coupling element (58) is rotatably connected at a first end section (60) with the first coupling rod (66) and at a second end section (62) with a second coupling rod (68) and a first group of second slats (24) is connected with the first coupling rod (66) and a second group of second slats (24) is connected with the second coupling rod (68).

3. Device according to claim 2, wherein the first coupling element (58) is rotatable in common with the second control slat (70) about the pivot axis (C) thereof and at a spacing from the pivot axis (C) of the second control slat (70) is connected with the first coupling rod (66) and the second coupling rod (68).

4. Device according to claim 2 or 3, wherein the lever arrangement (22) comprises
- a second coupling element (44), which is rotatably coupled with the second bevel gear (40), with a first entrainer (46) arranged eccentrically with respect to the axis (A) of rotation of the second coupling element (44) and
- a lever element (48), which is rotatably arranged at the housing (12), with a first gate guide (54) and a second gate guide (56) respectively arranged at opposite sections at a spacing from the axis (B) of rotation of the lever element (48),
wherein the first entrainer (46) is guidably located in the first gate guide (54) and a second entrainer (64) is guidably located in the second gate guide (56) and wherein the second entrainer (64) is arranged in the first end section (60) of the first coupling element (58) and is rotatably connected with the first coupling rod (66).

5. Device according to claim 4, wherein the lever element (48) has in the region of the second gate guide (56) at least one abutment (72) which limits the pivotation or swivelling of the second slats (24)
- by way of the first coupling rod (66) and/or the second coupling rod (68) or
- by way of a guide (76) at the housing (12).

6. Device according to any one of claims 1 to 5, wherein the control element (18) has a third gate guide (30) extending along the longitudinal axis of the control element (18), and a third coupling element (36), which is connected with the first bevel gear (34), is arranged in the third gate guide (30).

7. Device according to any one of claims 1 to 6, wherein the control element (18) has a spherical end section received in a ball socket (21) of the first control slat (20).

8. Device according to any one of claims 1 to 7, wherein the second slats (24) have a cross-section with at least one step.

9. Device according to any one of claims 1 to 8, wherein the second slats (24) have a seal at least at the outer edges thereof extending parallel to the pivot axis (C) and/or the housing (12) has in the region of the second slats (24) a seal at least at inner side walls extending parallel to the pivot axis (C) of the second slats (24).

10. Device according to any one of claims 1 to 9, wherein at least the lever element (48), the first coupling rod (66) and/or the second coupling rod (68) and the first coupling element (58) are arranged outside the housing (12).

11. Device according to any one of claims 1 to 10, wherein the first control slat (20) is coupled with at least one further slat pivotably mounted on the housing (12).

## Revendications

1. Dispositif de commande d'un flux d'air, avec au moins une première lamelle de commande (20) logée de manière pivotante dans un boîtier (12) et avec des deuxièmes lamelles (24) logées de manière pivotante dans le boîtier (12) et s'étendant orthogonalement à la première lamelle de commande (20), dans lequel la direction du flux d'air sortant du boîtier (12) est réglable via la première lamelle de commande (20) et les deuxièmes lamelles (24) et la quantité d'air sortant est réglable via les deuxièmes lamelles (24),
**caractérisé en ce que** le dispositif comprend un élément d'actionnement (18), qui est agencé au niveau d'une zone de sortie d'air (14) du boîtier (12) par le biais d'une entretoise d'appui (16), dans lequel
- l'élément d'actionnement (18) est agencé de manière pivotante sur l'entretoise d'appui (16) orthogonalement à l'axe longitudinal de la première lamelle de commande (20) et est couplé à une première roue conique (34) logée de manière rotative sur l'entretoise d'appui (16), et aussi couplé à la première lamelle de commande (20),
- la première roue conique (34) est en prise avec une deuxième roue conique (40),
- la deuxième roue conique (40) est agencée de manière rotative sur le boîtier (12) orthogonalement à la première roue conique (34),
- la deuxième roue conique (40) est couplée à un ensemble de levier (22), et
- l'ensemble de levier (22) présente au moins un premier organe de couplage (58) logé en rotation, qui est couplé à au moins une première tige de couplage (66) et l'au moins une tige de couplage (66) est couplée aux deuxièmes lamelles (24).

2. Dispositif selon la revendication 1, dans lequel une des deuxièmes lamelles (24) est réalisée en tant que deuxième lamelle de commande (70) et le premier organe de couplage (58) est relié à la deuxième lamelle de commande (70), dans lequel des deuxièmes lamelles (24) agencées parallèlement aux deux côtés de la deuxième lamelle de commande (70) s'étendent, dans lequel le premier organe de couplage (58) est relié en rotation au niveau d'une première section d'extrémité (60) à la première tige de couplage (66) et au niveau d'une deuxième section d'extrémité (62) à une deuxième tige de couplage (68) et un premier groupe de deuxièmes lamelles (24) est relié à la première tige de couplage (66) et un deuxième groupe de deuxièmes lamelles (24) est relié à la deuxième tige de couplage (68).

3. Dispositif selon la revendication 2, dans lequel le premier organe de couplage (58) est relié conjointement avec la deuxième lamelle de commande (70) en rotation autour de son axe de pivotement (C) et à distance de l'axe de pivotement (C) de la deuxième lamelle de commande (70) à la première tige de couplage (66) et à la deuxième tige de couplage (68).

4. Dispositif selon la revendication 2 ou 3, dans lequel l'ensemble de levier (22) présente
- un deuxième organe de couplage (44) couplé de manière rotative à la deuxième roue conique (40) avec un premier entraîneur (46) agencé de manière excentrique par rapport à l'axe de rotation (A) du deuxième organe de couplage (44), et
- un élément de levier (48) agencé de manière rotative sur le boîtier (12) avec une première coulisse de guidage (54) et une deuxième coulisse de guidage (56), qui sont agencées respectivement à distance de l'axe de rotation (B) de l'élément de levier (48) au niveau de sections opposées,
dans lequel le premier entraîneur (46) est logé de manière à pouvoir être guidé dans la première coulisse de guidage (54) et un deuxième entraîneur (64) est logé de manière à pouvoir être guidé dans la deuxième coulisse de guidage (56), et dans lequel le deuxième entraîneur (64) est agencé dans la première section d'extrémité (60) du premier organe de couplage (58) et est relié en rotation à la première tige de couplage (66).

5. Dispositif selon la revendication 4, dans lequel l'élément de levier (48) présente dans la zone de la deuxième coulisse de guidage (56) au moins une butée (72), qui limite le pivotement ou basculement des deuxièmes lamelles (24)
- par le biais de la première tige de couplage (66) et/ou de la deuxième tige de couplage (68), ou
- par le biais d'un guidage (76) au niveau du boîtier (12).

6. Dispositif selon l'une quelconque des revendications 1 à 5, dans lequel l'élément d'actionnement (18) présente une troisième coulisse de guidage (30), qui s'étend le long de l'axe longitudinal de l'élément d'actionnement (18), et un troisième organe de couplage (36), qui est relié à la première roue conique (34), est agencé dans la troisième coulisse de guidage (30).

7. Dispositif selon l'une quelconque des revendications 1 à 6, dans lequel l'élément d'actionnement (18) présente une section d'extrémité sphérique, qui est reçue dans un logement sphérique (21) de la première lamelle de commande (20).

8. Dispositif selon l'une quelconque des revendications 1 à 7, dans lequel les deuxièmes lamelles (24) présentent une section transversale avec au moins un gradin.

9. Dispositif selon l'une quelconque des revendications 1 à 8, dans lequel les deuxièmes lamelles (24) présentent au moins à leurs arêtes extérieures s'étendant parallèlement à l'axe de pivotement (C) un joint et/ou le boîtier (12) présente un joint dans la zone des deuxièmes lamelles (24) au moins au niveau de parois latérales intérieures s'étendant parallèlement à l'axe de pivotement (C) des deuxièmes lamelles (24).

10. Dispositif selon l'une quelconque des revendications 1 à 9, dans lequel au moins l'élément de levier (48), la première tige de couplage (66) et/ou la deuxième tige de couplage (68) et le premier organe de couplage (58) sont agencés en dehors du boîtier (12).

11. Dispositif selon l'une quelconque des revendications 1 à 10, dans lequel la première lamelle de commande (20) est couplée à au moins une autre lamelle logée de manière pivotante sur le boîtier (12).
